# NEW EUROPEAN PATENT SPECIFICATION

(11) **EP 0 966 636 B2**
(45) Date of publication and mention of the opposition decision: **08.04.2009**
(45) Mention of the grant of the patent: 09.03.2005
(21) Application number: 98964568.4
(22) Date of filing: 29.12.1998
(51) Int. Cl.: F24D 3/16, F24F 5/00

(54) **CEILING STRUCTURE FOR HEATING OR COOLING A ROOM**
DECKENKONSTRUKTION ZUM HEIZEN ODER KÜHLEN EINES ZIMMERS
STRUCTURE DE PLAFOND POUR CHAUFFER OU REFROIDIR UNE PIECE

(30) Priority: 29.12.1997 NL 1007919
(43) Date of publication of application: 29.12.1999
(73) Proprietor: Rau & Partners B.V., 1019 LA Amsterdam (NL)
(72) Inventor: RAU, Thomas, Martin, NL-1075 HB Amsterdam (NL)
(74) Representative: Metman, Karel Johannes
(86) International application number: PCT/NL1998/000744
(87) International publication number: WO 1999/034149

(56) References cited:
- WO-A-88/10402
- BE-A- 528 561
- DE-A- 4 027 833
- DE-A- 4 403 528
- GB-A- 2 265 703
- GB-A- 2 378 502
- JOHN BERGS: 'Blijven dokteren aan het ontwerp', 30 September 1997, DHV AIB article 'Architetuur-Bouwer', pages 12 - 15

## Description

The present invention relates to a building according to the preamble of claim 1.

Heating systems in buildings, both office buildings and houses and the like, generally employ radiators, which are inevitably placed against the outside wall of the room to be heated. A drawback of this is that the heating system takes up space and that furniture cannot be placed close to the wall in question, as a result of which the floor area of the room and the light from outside cannot be utilized optimally. Furthermore, the efficiency of such heating means is not optimal.

A building according to the preamble of claim 1 is known from WO 88/10402. According to this document, there is provided ventilation equipment with an intake of fresh air supply device and heat emitting or absorbing ceiling panels. These panels are placed laterally adjacent to the fresh air supply device, which is formed for blowing in air laterally along the underside of the panels so that the blown-in air coacts thermally with the panels.

The object of the present invention is to provide a building wherein drawbacks of the prior art are eliminated in an effective manner.

In order to accomplish that objective, the building according to the invention is characterized by the features of the characterizing portion of claim 1.

As a result of the invention, the air will flow into the room at the end of the ceiling plate after it has been warmed up. By leaving clear said gap to the adjoining wall of the room, circulation of hot or cold air can take place via said gap, so that an agreeable climate is obtained throughout the room.

An embodiment of the invention can be realized especially well if the ceiling plate according to the invention is provided not only with heating means, but also with cooling means, if desired, with means for enhancing the acoustic and/or with lighting means. In that case, there is hardly any need, if at all, for a lowered ceiling extending over the entire room area for fitting lighting means and for leading through and covering electrical conduits and elements of the ventilating, cooling and/or heating system.

In one advantageous embodiment, the climate means comprise at least one water tube extending over said ceiling plate, which water tube is connected, preferably by means of flexible supply and discharge hoses, to a water supply of the building, whilst the ceiling plate is suspended from the ceiling by suspension means, for example cables, chains or the like, and wherein said suspension means are preferably adjustable for the purpose of lowering the ceiling plate.

In this manner it is possible to connect the heating means to a usual hot-water supply, such as a heating boiler or the like, in a simple manner, whilst it is also readily possible in this manner to lower the ceiling plate for cleaning purposes or for carrying out repairs on the upper side of the ceiling plate. In this water-cooled embodiment, the heating means can also be used as cooling means in the summer, in that unheated, cool water is led through the ceiling plate, thus providing a cooling effect.

The invention will be explained in more detail below with reference to the drawings, which schematically show an embodiment of the invention.

Fig. 1 shows a highly schematic, vertical longitudinal section of a building according to the invention.

Fig. 2 shows a horizontal longitudinal section of the room of Fig. 1.

Fig. 3 is a larger-scale plan view of a ceiling plate according to the invention.

Fig. 4 is a sectional view along line III-III in Fig. 3.

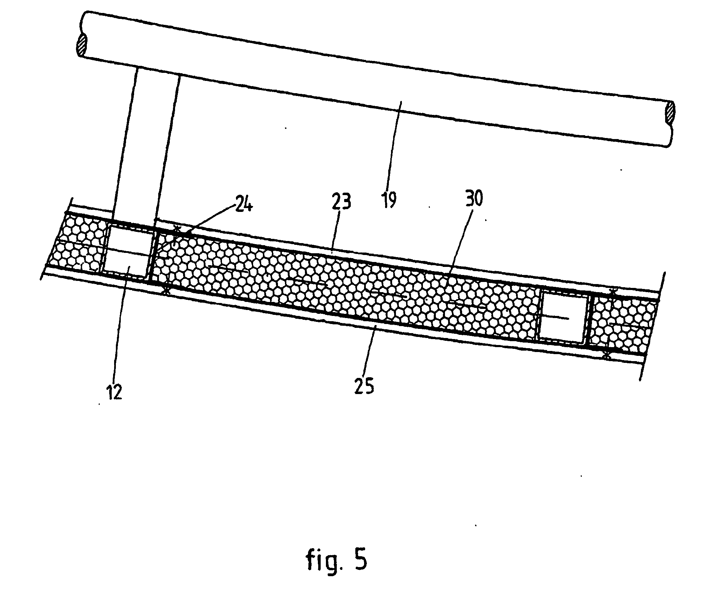

Fig. 5 is a larger-scale view of details from Fig. 4.

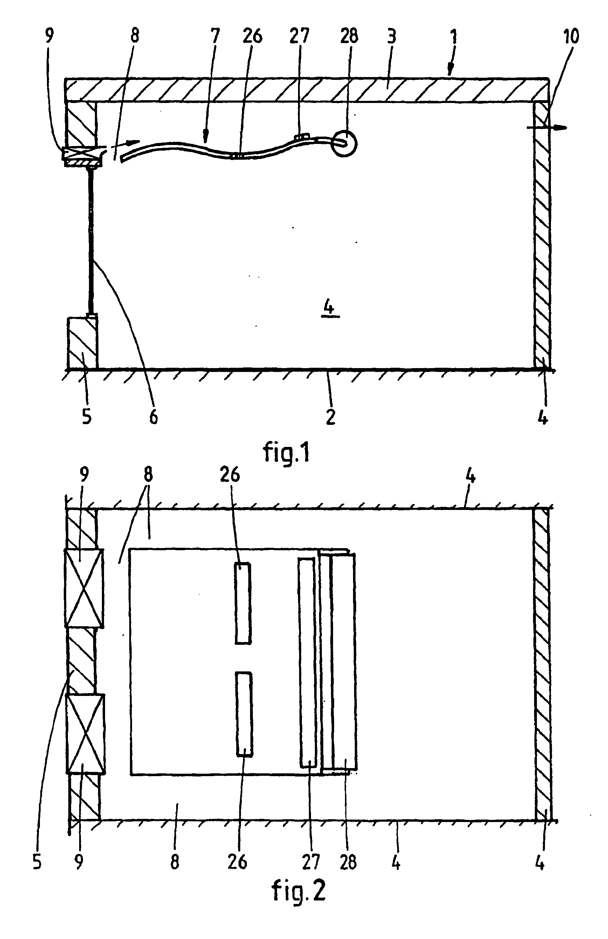

The drawings, and in the first instance Figs. 1 and 2 thereof, show a room of a building, which may for example be a commercial or industrial building, but also a house or a similar building. Room 1 comprises a floor 2, a ceiling 3, one or more inside walls 4 and at least one outside wall 5. A casing comprising a window 6 may be provided in said outside wall 5.

The heating, and possibly also the cooling, of room 1 is arranged by means of a ceiling plate 7 which is suspended in room 1, in which ceiling plate heating and/or cooling means - yet to be described in more detail - are present, which heating and/or cooling means may also be called climate means. Ceiling plate 7 extends from an outside wall 5 over part of the area of ceiling 3 of room 1, preferably leaving clear a gap 8 to the outside wall 5 and/or to the adjacent side walls 4. Since the ceiling plate 7 is clear of the walls of the room, it may also be called a ceiling island. Said gap may for example be 200 - 300 mm.

Silencers 9, two in the present case, are built into the outside wall 5 of room 1, above window 6, which silencers are capable of admitting ventilating air from around the building whilst shutting out noise, preferably by making use of the natural pressure difference, so that a powered fan is not required. The admitted air is led into the room, and that in such a manner that the fresh ventilating air is led over the ceiling plate. The outlet openings of the silencers 9 are positioned at the highest possible location in the silencers, and they are relatively narrow, so that an outflow rate of nominally about 1 m/s can be achieved. The room may furthermore be provided with a mechanical exhaust system for maintaining or promoting the natural ventilation. The exhaust point may be present near the ceiling in that case, centrally in the side wall 4 opposite outside wall 5, at the place which is indicated at 10. By leaving clear the gap 8 to the adjoining walls of the room, circulation of hot or cold air can take place via said gaps as well, so that an agreeable climate is obtained throughout the room.

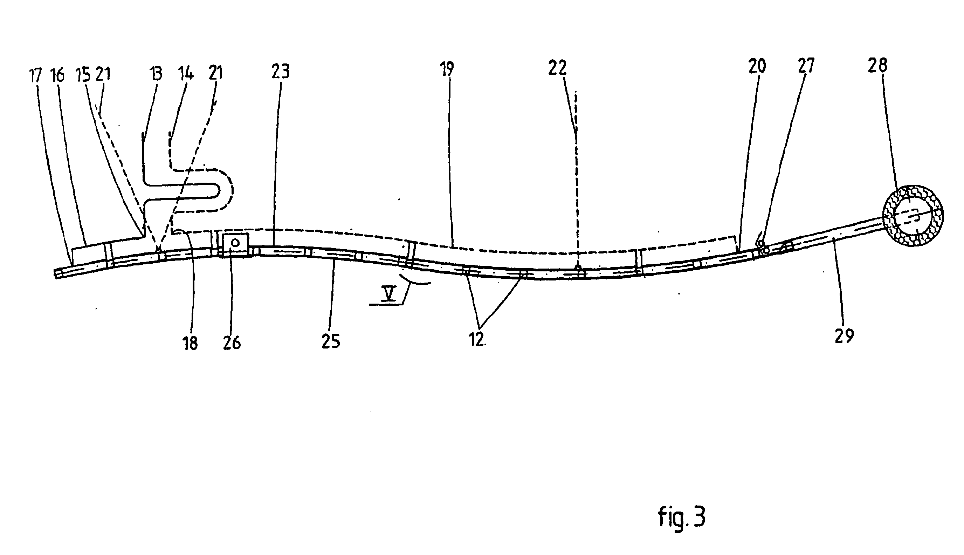

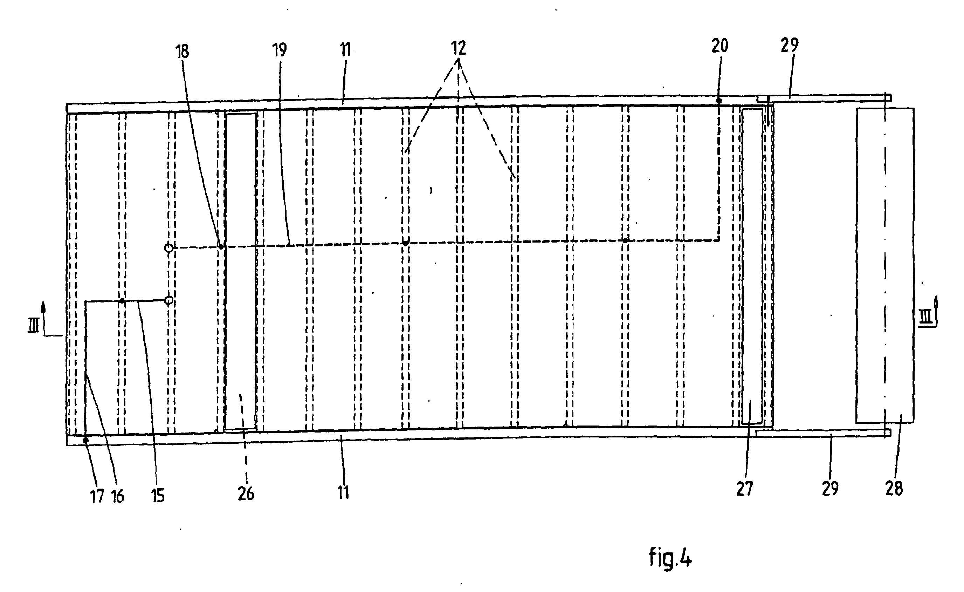

Figs. 3, 4 show a possible structure of ceiling 7 in more detail. Said ceiling plate 7 may be formed into a ceiling island by itself or in combination with one or more other ceiling plates. Ceiling plate 7 comprises a tubular frame, which on the one hand determines the structure of the plate and which on the other hand functions to pass through water for the purpose of cooling or heating the room. The tubular frame is made up of two parallel main tubes 11 extending along the longitudinal sides of ceiling plate 7, and a number of register tubes 12, thirteen in the present embodiment, which extend therebetween. Main tubes 11 are thereby arranged in such a manner that the water is forced to flow forward and backward over ceiling plate 7 through register tubes 12 and main tubes 11. The supply and discharge of water takes place via a flexible supply hose 13 and a flexible discharge hose 14. Supply hose 13 connects at 15 to a supply pipe 16 extending above ceiling plate 7, which supply pipe opens into one of the main tubes 11. Discharge hose 14 connects at 18 to a discharge pipe 16, which likewise extends above ceiling plate 7, in spaced-apart relationship therewith, and which is in communication with the other main tube 11 at 20, at the opposite end of ceiling plate 7.

Ceiling plate 7 can be suspended from the ceiling of the room by means of steel cables 21 and 22, whereby it is possible to pay out steel cable 22, so that the ceiling plate 7 will pivot downwards about the suspension point of steel cable 11, as a result of which the upper side of ceiling plate 7 will become accessible for cleaning purposes or repairs. The flexible supply hoses 13 and 14 allow such a pivoting movement of ceiling plate 7.

The tubular frame consisting of main tubes 11 and register tubes 12 is covered on the upper side by means of a metal, for example steel or aluminium, plate 23, which may be fixed to tubes 12 by means of pop rivets or spot welds on U-sections 24. Plate 23 is preferably a non-perforated plate. Important is that plate 23 or another type of cover exhibit good heat conducting properties, so that heat from the water flowing through the tubes can readily be delivered to the air flowing above the ceiling.

The underside of the tubular frame may be covered by a metal, preferably aluminium or steel, plate, which is likewise fixed to the U-sections and which is preferably perforated and fitted with an acoustical membrane (not shown), which functions to enhance the acoustic in room 1. The aluminium or steel plate conducts heat and reflects light, so that radiant heat is delivered to the room and natural light is reflected to deep within the room. The spaces between plates 23, 25 and tubes 11, 12 may be filled with an insulating material 20, such as glass wool.

The ceiling plate according to the invention is furthermore provided with lighting fittings, in this embodiment in the form of an fitting 26 delivering light in downward direction, which is present at the location of the top of the upward curve of ceiling plate 7, and an fitting 27 delivering light obliquely upwards, in a direction away from ceiling plate 7, which is present near the side of ceiling plate 7 that will face away from the outside wall 5 of room 1. Fittings 26 and 27 are capable of lighting the entire room, so that no other light connections are required in the room, which makes it much easier to arrange the room. Not shown in the drawing are electrical conduits, which extend through the ceiling plate and, at the location of hoses 13 and 14, to a terminal connecting point in the room. In the present embodiment, fittings 26 and 27 extend above the upper plate 23 of the ceiling plate, which might influence the flow of air over the ceiling plate and the heat transmission. This may be prevented or lessened by using other fittings or a lower position of the fittings, or by making the ceiling plate 7 thicker.

On the air exhaust side of ceiling plate 7, that is, the side that will face away from outside wall 5 in use, an acoustic damping element in the form of a roll 28 may be provided, if desired, which is fixed at some distance from the end of ceiling plate 7 by means of sections 29. Said roll 28 will provide an additional enhancement of the acoustic in room 1, if necessary.

Experiments have shown that satisfactory results in the form of great thermal comfort can be obtained with the ceiling plate according to the invention, both in the winter, when ceiling plate 7 functions as a heating element, and in the summer, when a cooling effect is achieved by means of ceiling plate 7. A satisfactory heating and cooling efficiency is achieved, whilst the ceiling plate enables a better use of the space in a building and of the natural outside light. Thus, no radiators are needed in the room, as a result of which a larger usable area is obtained, whilst the ceiling plate 7, which only extends over part of each room, obviates the need to use complete lowered ceilings. Indeed, all facilities for the room are incorporated in the ceiling plate, which is only present near the outside wall of the ceiling. This makes it possible to design the building with lower storeys, which considerably decreases the construction cost of buildings, of course.

The invention is not limited to the above-described embodiment as shown in the drawing and described above, which can be varied in several ways within the scope of the invention. Thus, the structure, the suspension and the dimensions of the ceiling plate can be varied as desired. For example, the ceiling plate may be simply flat instead of curved. Furthermore, the ceiling plate may consist of a number of plate parts, which may or may not be formed into one unit. Also the heating means may be of different construction. Besides being used for ventilation, heating, cooling, lighting and acoustic enhancement, the system could also be used for other purposes. Of course it is possible to leave out one of the aforesaid facilities. If the ventilating air is not obtained directly from outside, the ceiling plate may also be positioned to adjoin a wall of a room other than the outside wall.

## Claims

1. A building having at least one room (1) comprising a floor (2), a ceiling (3), side walls (4) and at least one outside wall (5), air flow means (9) to bring air into the room, as well as climate means (11, 12), which are incorporated in a ceiling plate (7), which is supported some distance below the ceiling of said room to create a space above the ceiling plate (7), said ceiling plate (7) extending over part of the ceiling area only, leaving the ceiling (3) free at least on one side, **characterized in that** said airflow means (9) is provided in one of the walls (4,5) and is adapted to direct air into the space between the ceiling plate (7) and the ceiling (3) towards said one side of the ceiling plate and into the room, a gap (8) between the ceiling plate (7) and the wall (4, 5) being present on the side of the ceiling plate (7) opposite said one side in order to cause air to flow from the room (1) to the space above the ceiling plate (7).

2. A building according to claim 1, wherein said gap (8) is positioned at the wall (5) comprising said air flow means (9).

3. A building according to claim 1 or 2, wherein the ceiling plate (7) is clear from the walls (4, 5) of the room on all of its sides.

4. A building according to any one of the preceding claims, wherein said ceiling plate (7) is furthermore provided with lighting means (26, 27) and/or with means (28) for enhancing the acoustic.

5. A building according to any one of the preceding claims, wherein said airflow means (9) are provided in the outside wall (5) of the room (1) and are adapted to draw in air from outside the building.

6. A building according to claim 5, wherein said airflow means (9) comprise at least one silencer, which preferably comprises an air outlet at a high position therein.

7. A building according.to any one of the preceding claims, wherein the room (1) is provided with mechanical exhaust means.

8. A building according to any one of the preceding claims, wherein at least the upper side of the ceiling plate (7) is heat conducting

9. A building according to any one of the preceding claims, wherein said climate means (11, 12) comprise at least one water tube (12) extending over said ceiling plate (7), which water tube is connected to a water supply of the building, preferably by means of flexible supply and discharge hoses (12).

10. A building according to any one of the preceding claims, wherein said ceiling plate (7) is suspended from the ceiling (3) by suspension means (22), for example cables, chains or the like, and wherein said suspension means are preferably adjustable for the purpose of lowering the ceiling plate.

11. A building according to one of the preceding claims, wherein said ceiling plate (7) is covered on its upper side and its underside by thin plates (23, 25), preferably metal plates, and wherein said lower plate (25) is preferably provided with means for enhancing the acoustic, such as perforations and/or a membrane, and is light reflecting.

12. A building according to one of the preceding claims, wherein the ceiling plate (7) is formed with wavy corrugations.

## Patentansprüche

1. Gebäude mit wenigstens einem Zimmer (1), das einen Boden (2) eine Decke (3), Seitenwände (4) und wenigstens eine Außenwand (5), Luftzuführmittel (9), um Luft in das Zimmer zu bringen, und Klimaelemente aufweist, die in einer Deckenplatte (7) beinhaltet sind, die in einigem Abstand unterhalb der Decke des Zimmers aufgehängt ist, so dass ein Zwischenraum über der Deckenplatte (7) entsteht, wobei die Deckenplatte (7) sich über lediglich einen Teil des Deckenbereichs erstreckt und somit die Decke (3) an wenigstens einer Seite freiläßt, **dadurch gekennzeichnet, dass** das Luftzuführmittel (9) in einer Wänder (4, 5) vorgesehen ist und darauf ausgelegt ist, Luft in den Raum zwischen der Deckenplatte (7) und der Decke (3) in Richtung der besagten einen Seite der Deckenplatte und in das Zimmer zu leiten, wobei eine Lücke (8) zwischen der Deckenplatte (7) und der Wand (4, 5) an der Seite der Deckenplatte (7) vorhanden ist, die der besagten einen Seite gegenüberliegt, um einen Luftstrom vom Zimmer (1) in den Raum über der Deckenplatte (7) hervorzurufen.

2. Gebäude nach Anspruch 1, wobei die Lücke (8) an der Wand (5) mit dem Luftzuführmittel (9) angeordnet ist.

3. Gebäude nach Anspruch 1 oder 2, wobei die Deckenplatte (7) an all ihren Seiten von den Wänden (4, 5) des Zimmers beabstandet ist.

4. Gebäude nach einem der vorangehenden Ansprüche, wobei die Deckenplatte (7) weiterhin mit Leuchtmitteln (26, 27) und/oder mit Mitteln (28) zum Verbessern der Akustik ausgestattet ist.

5. Gebäude nach einem der vorangehenden Ansprüche, wobei das Luftzuführmittel (9) in der Außenwand (5) des Zimmers (1) vorgesehen ist und darauf ausgerichtet ist, Luft von der Außenumgebung des Gebäudes nach innen zu ziehen.

6. Gebäude nach Anspruch 5, wobei das Luftzuführmittel (9) wenigstens einen Geräuschdämpfer aufweist, der vorzugsweise einen Luftauslass in einer hohen Position darin aufweist.

7. Gebäude nach einem der vorangehenden Ansprüche, wobei das Zimmer (1) mit mechanischen Entlüftungsmitteln ausgestattet ist.

8. Gebäude nach einem der vorangehenden Ansprüche, wobei wenigstens die obere Seite der Deckenplatte (7) wärmeleitend ist.

9. Gebäude nach einem der vorangehenden Ansprüche, wobei die Klimaelemente (11, 12) wenigstens ein Wasserrohr (12) aufweisen, das sich über die Deckenplatte (7) erstreckt und mit einer Wasserversorgung des Gebäudes vorzugsweise mittels biegsamer Versorgungs- und Abflussschläuche (12) verbunden ist.

10. Gebäude nach einem der vorangehenden Ansprüche, wobei die Deckenplatte (7) von der Decke (3) mittels Aufhängemitteln (22), z.B. Kabeln, Ketten oder dergleichen, aufgehängt ist, und wobei die Aufhängemittel vorzugsweise zum Zwecke des Absenkens der Deckenplatte verstellbar sind.

11. Gebäude nach einem der vorangehenden Ansprüche, wobei die Deckenplatte (7) an ihrer oberen Seite und an ihrer Unterseite durch dünne Platten (23, 25), vorzugsweise Metallplatten, bedeckt ist, und wobei die unteren Platte (25) vorzugsweise mit Mitteln zum Verbessern der Akustik, wie Perforationen und/oder eine Membran, ausgestattet ist und Licht reflektiert.

12. Gebäude nach einem der vorangehenden Ansprüche, wobei die Deckenplatte (7) wellenförmig ausgebildet ist.

## Revendications

1. Bâtiment comprenant au moins une pièce (1) comprenant un plancher (2), un plafond (3), des murs latéraux (4) et au moins un mur extérieur (5), des moyens de circulation d'air (9) pour amener de l'air dans la pièce, ainsi que des moyens climatiques (11, 12), qui sont intégrés dans une plaque de plafond (7), qui sont supportés à une certaine distance en dessous du plafond de ladite pièce pour créer un espace au-dessus de la plaque de plafond (7), ladite plaque de plafond (7) s'étendant sur une partie de la zone du plafond uniquement, laissant ainsi le plafond (3) libre au moins sur un côté, **caractérisé en ce que** lesdits moyens de circulation d'air (9) sont prévus dans un des murs (4, 5) et sont adaptés pour diriger l'air dans l'espace entre la plaque de plafond (7) et le plafond (3) en direction dudit un côté de la plaque de plafond et dans la pièce, un jeu (8) entre la plaque de plafond (7) et le mur (4, 5) étant présent sur le côté de la plaque de plafond (7) opposé audit un côté afin d'entraîner l'air à circuler de la pièce (1) vers l'espace au-dessus de la plaque de plafond (7).

2. Bâtiment selon la revendication 1, dans lequel ledit jeu (8) est positionné au niveau du mur (5) comprenant lesdits moyens de circulation d'air (9).

3. Bâtiment selon la revendication 1 ou 2, dans lequel la plaque de plafond (7) est nette à partir des murs (4, 5) de la pièce sur tous ses côtés.

4. Bâtiment selon l'une quelconque des revendications précédentes, dans lequel ladite plaque de plafond (7) est en outre pourvue de moyens d'éclairage (26, 27) et/ou de moyens (28) pour améliorer l'acoustique.

5. Bâtiment selon l'une quelconque des revendications précédentes, dans lequel lesdits moyens de circulation d'air (9) sont prévus dans le mur extérieur (5) de la pièce (1) et sont adaptés pour amener de l'air de l'extérieur du bâtiment.

6. Bâtiment selon la revendication 5, dans lequel lesdits moyens de circulation d'air (9) comprennent au moins un amortisseur de son, qui comprend de préférence un orifice d'évacuation d'air à une position élevée dans celui-ci.

7. Bâtiment selon l'une quelconque des revendications précédentes, dans lequel la pièce (1) est pourvue de moyens d'évacuation mécaniques.

8. Bâtiment selon l'une quelconque des revendications précédentes, dans lequel au moins le côté supérieur de la plaque de plafond (7) est conductrice de chaleur.

9. Bâtiment selon l'une quelconque des revendications précédentes, dans lequel lesdits moyens climatiques (11, 12) comprennent au moins un tube d'eau (12) s'étendant sur ladite plaque de plafond (7), lequel tube d'eau est raccordé à une alimentation en eau du bâtiment, de préférence au moyen de tuyau d'alimentation et d'évacuation (12).

10. Bâtiment selon l'une quelconque des revendications précédentes, dans lequel ladite plaque de plafond (7) est suspendue au plafond (3) grâce à des moyens de suspension (22), par exemple des câbles, des chaînes ou similaires, et dans lequel lesdits moyens de suspension sont de préférence ajustables en vue d'abaisser la plaque de plafond.

11. Bâtiment selon l'une quelconque des revendications précédentes, dans lequel ladite plaque de plafond (7) est recouverte sur son côté supérieur et son côté inférieur de plaques minces (23, 25), de préférence de plaques métalliques, et dans lequel ladite plaque inférieure (25) est de préférence pourvue de moyens pour améliorer l'acoustique, comme des perforations et/ou une membrane, et qui réfléchit la lumière.

12. Bâtiment selon l'une quelconque des revendications précédentes, dans lequel la plaque de plafond (7) est formée d'ondulations.
